# EUROPEAN PATENT APPLICATION

(11) **EP 1 646 001 A1**
(43) Date of publication of application: **12.04.2006**
(21) Application number: 05255919.2
(22) Date of filing: 22.09.2005
(51) Int. Cl.: G06Q 10/00

(54) **Email customization techniques and systems**

(30) Priority: 24.09.2004 US 949615
(71) Applicant: Hewlett-Packard Development Company, L.P., Houston, TX 77070 (US)
(72) Inventor: Tripp, Travis S., Fort Collings, Colorado 80525 (US)
(74) Representative: Exell, Jonathan Mark

(57) **Abstract**

An automated email system configured to perform an email task with respect to a recipient on behalf of an application. The email system includes a recipient data engine (224) configured to obtain specific recipient data pertaining to the recipient responsive to a request from the application to perform the email task. The email system further includes a message resource file directory (MRFD) (314) configured to provide a message resource file (MRF) (316) that is specific at least to the email task and the application. The MRF (316) is configured to generate a customized email (320) that is customized for the recipient based on the specific recipient data. The customized email (320) is customized in at least one of a first customized manner and a second customized manner, the first customized manner representing locale customization, the second customized manner representing content customization.

## Description

### BACKGROUND OF THE INVENTION

Electronic mails or emails have become an important tool for communication, particularly for businesses that need to send out a large number of emails to a large number of recipients. Mass emails are a particularly efficient vehicle for communicating with a large number of recipients. Mass emailing may involve a generic message or a customized message. In the generic email case, all recipients receive identical emails with identical content. An example of a generic email may be an Internet merchant sending an advertisement for a new product to all customers. Another example of a generic email may be a human resource department sending an email informing all employees of the company's holiday calendar.

In the customized email case, each email is customized for the individual recipient using data specific to that recipient. For example, the Internet merchant may need to send out order confirmation emails to a group of customers, each of whom ordered a different item. Although the intent of the email is substantially the same (e.g., confirmation of an order), the customer specific data (e.g., name, address, item ordered, method of payment, etc.) is different for each recipient. As another example, the human resource department of a company may send an email to each employee to inform each employee of the number of hours worked by the employee in the past month.

In the past, each application that needs to perform customized mass emailing needs to have an email component custom-created for it. For example, the Internet merchant's ordering software needs to have a mass email component custom-created to perform the aforementioned order confirmation-emailing task. Likewise, the human resource software responsible for tracking employees' hours needs to have a mass email component custom-created to enable the aforementioned emails pertaining hours worked to be sent.

An example of this approach may be found in the form letter feature of some word processing application software. In a form letter example, the form letter component of the word processing application software allows text fields in a form letter to be populated with customer data stored in a different file. The word processor user needs to create the form letter once, furnishes the file that contains different customers, and the form letter feature would produce form letters addressed to different customers at different addresses, for example.

Over time, application software has evolved beyond word processing. Increasingly, applications that previously may be thought of as purely analytical or back-office are employing emails in their workflow to communicate with human recipients. Furthermore, as application software becomes more complex, the support burden has increased. Concomitantly, the cost of providing such support has increased dramatically. Nowadays, many organizations no longer wish to devote resources to custom-create and support email components for their numerous applications.

Further, the economy and the workplace have become globalized. Email recipients, such as workers and customers, may reside in all corners of the globe, may speak different language, and their computers may support different types of content. For example, a customer who happens to be a Russian specialist doing research in a third-world country and who can access emails only via a slow satellite connection on his palm-top computer may be able to read only emails sent using plain Russian Cyrillic text.

On the other hand, a computer-savvy customer in California having access to high-speed cable or DSL (digital subscriber line) service may prefer emails in English that are accompanied by interesting graphics. As such, the email confirmations for ordered goods sent to the Russian specialist and the California customer need to have different content types (e.g., plain text versus HTML) and in different language (e.g., Russian Cyrillic versus English) and different localization features (e.g., different date/time formats) although the intent is the same (i.e., confirmation of orders). The multiplicity of localization requirements (e.g., language, local formatting, etc.) and content types also makes the supporting burden more onerous and discourage organizations from creating and supporting their own email components for their various applications.

What is desired, therefore, is an automated email system that is capable of supporting different applications (e.g., ordering of goods or human resource), supporting different tasks (e.g., ordering confirmation or work hours reporting) to produce emails that can be customized for different recipients to suit the localization requirements and formatting requirements of particular recipients.

### SUMMARY OF INVENTION

The invention relates, in an embodiment, to an automated email system configured to perform an email task with respect to a recipient on behalf of an application. The email system includes a recipient data engine configured to obtain specific recipient data pertaining to the recipient responsive to a request from the application to perform the email task. The email system further includes a message resource file directory (MRFD) configured to provide a message resource file (MRF) that is specific at least to the email task and the application. The MRF is configured to generate a customized email that is customized for the recipient based on the specific recipient data. The customized email is customized in at least one of a first customized manner and a second customized manner, the first customized manner representing locale customization, the second customized manner representing content customization.

In another embodiment, the invention relates to a computer-implemented method for automatically handling an email task on behalf of an application to generate a customized email for a first recipient. The method includes receiving a request from the application, the request including a vocabulary key. The method also includes obtaining specific recipient data pertaining to the first recipient using the vocabulary key. The method additionally includes selecting a message resource file (MRF) from a message resource file directory (MRFD), the MRF being specific at least to the application and the email task. The method further includes filling out the MRF with the specific recipient data, thereby creating the customized email, whereby the customized email is customized in at least one of a first customized manner and a second customized manner, the first customized manner representing locale customization, the second customized manner representing content customization.

In yet another embodiment, the invention relates to an article of manufacture comprising a program storage medium having computer readable code embodied therein. The computer readable code is configured to automatically handle an email task on behalf of an application to generate a customized email for a first recipient. The article of manufacture includes computer readable code for receiving a request from the application, the request including a vocabulary key. The article of manufacture also includes computer readable code for obtaining specific recipient data pertaining to the first recipient using the vocabulary key. The article of manufacture further includes computer readable code for selecting a message resource file (MRF) from a message resource file directory (MRFD), the MRF being specific at least to the application and the email task. The article of manufacture additionally includes computer readable code for filling out the MRF with the specific recipient data, thereby creating the customized email, whereby the customized email is customized in at least one of a first customized manner and a second customized manner, the first customized manner representing locale customization, the second customized manner representing content customization.

These and other features of the present invention will be described in more detail below in the detailed description of the invention and in conjunction with the following figures.

### BRIEF DESCRIPTION OF THE DRAWINGS

The present invention is illustrated by way of example, and not by way of limitation, in the figures of the accompanying drawings and in which like reference numerals refer to similar elements and in which:

Fig. 1 shows, in accordance with an embodiment of the present invention, an email system that performs automation, customization, and localization of emails.

Fig. 2 shows, in accordance with an embodiment of the present invention, how an email system using the received vocabulary key may work with any application or any task to obtain the required specific recipient data.

Fig. 3 illustrates, in accordance with an embodiment of the present invention, how a customized email may be created from data pertaining to the identity of the application and the task, as well as from the specific recipient data.

Fig. 4 illustrates, in an embodiment of the present invention, the hot configuration feature for various components that an email system may access.

### DETAILED DESCRIPTION OF EMBODIMENTS

The present invention will now be described in detail with reference to a few embodiments thereof as illustrated in the accompanying drawings. In the following description, numerous specific details are set forth in order to provide a thorough understanding of the present invention. It will be apparent, however, to one skilled in the art, that the present invention may be practiced without some or all of these specific details. In other instances, well known process steps and/or structures have not been described in detail in order to not unnecessarily obscure the present invention.

Various embodiments are described hereinbelow, including methods and techniques. It should be kept in mind that the invention may also cover articles of manufacture that includes a computer readable medium on which computer-readable instructions for carrying out embodiments of the inventive technique are stored. The computer readable medium may include, for example, semiconductor, magnetic, opto-magnetic, optical, or other forms of computer readable medium for storing computer readable code. Further, the invention may also cover apparatuses for practicing embodiments of the invention. Such apparatus may include circuits, dedicated and/or programmable, to carry out tasks pertaining to embodiments of the invention. Examples of such apparatus include a general-purpose computer and/or a dedicated computing device when appropriately programmed and may include a combination of a computer/computing device and dedicated/programmable circuits adapted for the various tasks pertaining to embodiments of the invention.

In accordance with embodiments of the present invention, there are provided methods and arrangements for allowing an email system to automate, customize and localize one or more emails on behalf of any application and to handle any email-related task requested by any application. In an embodiment, any application such as one employed by a network-based merchant to sell goods or services or any other network-based application may send a task to the automated, customized, and localized (ACL) email system. The task may represent for example, but is not limited to, a request for a confirmation email, a request for shipping confirmation, or a request for bidding confirmation.

As the term is employed herein, an email may represent any electronic file or electronic document configured to be transmitted electronically to a human recipient. Emailing refers to the electronic transmission of such a file or a document. An email system refers to an arrangement for creating and optionally transmitting such a file or document.

In an embodiment, the application sends a task and a vocabulary key to the email system. The vocabulary key represents an identifier created by the application that enables the email system to communicate with an application database, i.e., the database that contains information pertaining to the recipient and other data to service the task request from the application, to obtain the required data to perform the task.

The email system then obtains the specific recipient data (e.g., purchasing data by John Smith that needs to be confirmed via an email) using the vocabulary key and creates a customized email that may be sent to the recipient. Customization may take the form of locale customization or content customization. Locale customization, otherwise known as localization, conforms the email to the recipient's actual or perceived preference with regard to language and/or grammar. Content customization formats the email in accordance with the recipient's actual or perceived preference (e.g., HTML versus plain text).

In an embodiment, the application sends a task request to the email system. The task request (e.g., send an order confirmation) may include a vocabulary key. The vocabulary key encapsulates data that allows a vocabulary provider arrangement or a vocabulary provider mechanism (hereinafter "vocabulary provider") to access the record of interest in the application database.

To elaborate, a vocabulary provider is specific to a particular application/task combination. Thus, an application may be associated with multiple vocabulary providers if there are multiple email-related tasks that the application may request vis-à-vis the email system. In an embodiment, the vocabulary provider is a part of the email system (e.g., a plug-in component). In another embodiment, the vocabulary provider may represent a component that is external to the email system.

In an embodiment, the vocabulary provider contains a list of vocabulary tags that may map to specific data fields in a record in the application database. These vocabulary tags are specific to a particular application/task combination since the vocabulary provider itself is specific to a particular application/task combination. For example, the vocabulary provider associated with the aforementioned order confirmation task from an invoicing application may contain the following vocabulary tags: $Recipient_Name, $Recipient_Address, and $Recipient_Language. These three vocabulary tags may map to three fields in records of the application database: CUST_NAME, CUST_ADDR, and CUST_LANG respectively.

In this manner, the vocabulary tags provide a mechanism to access the required data fields in records of the application database. The required data fields are of interest since they are employed to perform the requested email task (e.g., name, address, language, order amount for a purchase confirmation email task). The vocabulary key (which may encapsulate data pertaining to the recipient name or the order number, for example) allows the vocabulary provider to access the appropriate record in the application database (e.g., order #1589 or John Smith's June 19, 2004 order).

In an embodiment, the vocabulary provider may send the vocabulary key and vocabulary tags to the application database by mapping the request to a standard database communication language such as Structured Query Language (SQL). In return, the application database may send back to the vocabulary provider the specific recipient data that has been requested. Note that this specific recipient data is appropriate to the task (since the data is in response to the vocabulary tags which map to specific data fields) and pertains to the appropriate recipient (since the vocabulary key is employed as a key into the application database to access the appropriate record from which data in various data fields is obtained).

Using the specific recipient data, the email system may, in an embodiment, access a locale support mapper to obtain a localization specification (which may be expressed as a country/language code, for example). For example, the specific recipient data regarding a recipient Raul Cadena who lives in Tijuana, Mexico may be employed to obtain the localization specification of Mexico/Spanish.

The locale support mapper, in an embodiment of the invention, represents an arrangement for mapping the locale-related data in the specific recipient data to a localization specification. The localization specification may directly correspond to the language/dialect/country of the recipient or it may approximate the language/dialect/country of the recipient. Since the localization specification data is employed to select an associated MRF for emailing, the more closely the localization specification can be mapped to the preferred language/dialect/country of the recipient, the more suitable the selected MRF and the more closely the customization can be performed fit the preference of the recipient.

This localization specification is then employed, in connection with the data regarding the requesting application and the task to be performed, to select a specific message resource file (MRF) from a message resource file directory (MRFD). Using the order confirmation for Mr. Raul Cadena as an example, the localization specification of Mexico/Spanish results in the selection of the order confirmation MRF for Mexico/Spanish instead of the order confirmation MRF for Spain/Spanish or the order confirmation for Japan/Japanese.

Generally speaking, a MRF (message resource file), without more, may contain all the generic content information needed to create an email that is requested by the task. In an embodiment, since the MRF is selected based on the requesting application, the requesting task, and the localization specification, the selected MRF already implements locale customization. The specific recipient data is then employed to fill in the recipient-specific content fields in the MRF (such as the amount of the order, method of payment, date order, etc.). After filling in, the MRF is now an email that contains data specific to a specific recipient. The specific recipient data may also be employed to perform content customization by conforming the email to the specified or perceived preference of the recipient with regard to formatting and content (e.g., HTML versus plain text, bitmap graphics versus plain ASCII).

Furthermore, embodiments of the invention provide for hot configuration. Hot configuration, in an embodiment, relates to the ability to update or create components without powering off a system or restarting the software running on the system. Examples of components that may be hot configurable include application task configuration files, MRFs, vocabulary providers, and locale support mappers. In an embodiment, hot configuration is facilitated by the use of a cache for caching components. Thus, if a component needs to be reconfigured, a version of that component in the cache may be used while updates are made to an original version.

For example, suppose a current MRF needs to be modified. Instead of powering down the system to update the MRF, an administrator may update the version of the MRF in the MRF directory. Once completed, the new version of the MRF may be loaded to the cache, in an embodiment, when the email system makes a call for the MRF.

In an embodiment, an update component compares the last modified date of the cached version against the last modified date of the version in the MRF directory when a particular MRF is called. If these dates differ, the version in the MRF directory is uploaded onto the cache before the MRF is used from the cache. In another embodiment, the updated MRF may be proactively uploaded into the cache, with or without intervention of a human operator. In this latter case, there is no need to compare the last modified date of the cached version against the last modified date of the version in the MRF directory every time a particular MRF is called.

Thus, embodiments of the invention allow the ACL email system to service any email-related task on behalf of any application because the task of obtaining the required data for a specific recipient to perform a requested email task or to customize the resultant email has been encapsulated in the email system. From the perspective of the application making the task request, the application only needs to specify the task to be performed (e.g., confirmation of an order) along with sufficient information in the vocabulary key to identify the recipient and/or transaction at hand. The task of obtaining the rest of the data required to properly fill out the email and the customization task are performed in a manner that is substantially transparent to the application making the request.

One direct benefit of this approach is that the organization or entity that maintains or operates the application no longer needs to maintain an email component. Another benefit of this approach is that a single email system can serve the needs of different applications and different tasks, even if those applications are completely unrelated and/or operated by different organizations and/or executing on servers located in different regions of the world.

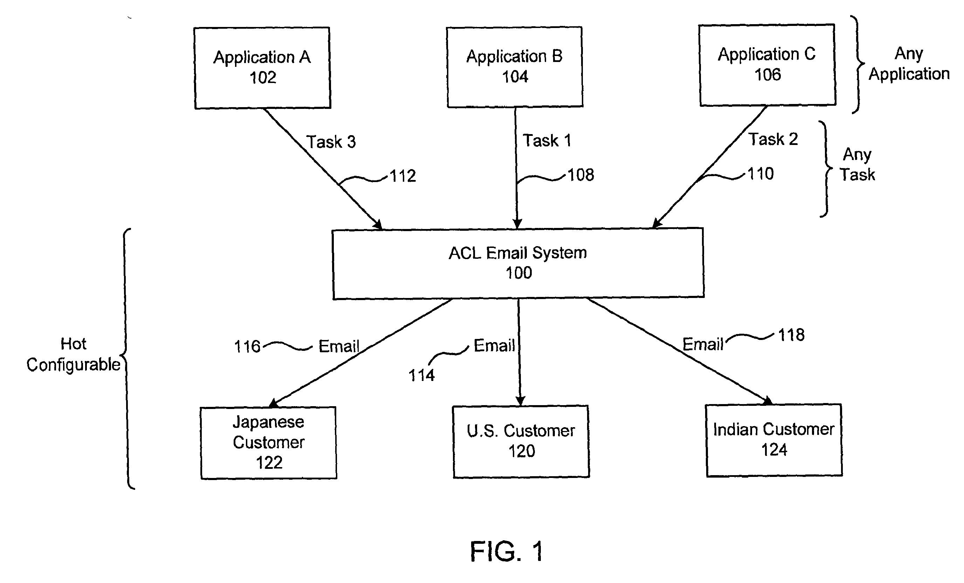

The invention may be better understood with reference to the figures and discussions herein. Fig. 1 shows, in accordance with an embodiment of the present invention, an email system that performs automation, customization, and localization of emails. The Automated, Customized and Localized Email System (ACL Email System) 100 may work with any application such as application A 102, application B 104 and application C 106. These applications may be executed on the same server or on different servers. Further, the servers that execute the applications may be operated by the same or different organizations and may be located in the same location or dispersed in different regions of the world.

Each application may request ACL Email System 100 to perform a set of tasks, which may include zero task, one task, or multiple tasks. For example, application A 102 may request the ACL Email System 100 to perform a number of tasks such as confirm order, confirm shipping, or reject a credit card.

Each of task requests 108, 110, and 112 includes a vocabulary key. Using the vocabulary key as well as the identity data regarding the requesting application and the requested task, ACL email system 100 automatically creates customized emails 114, 116, and 118 to be sent to respective recipients 120, 122, and 124.

An email created by ACL email system 100 may include locale customization and/or content customization. For example, a U.S. customer 120 may receive email 114 in the English language, and the email content may be formatted using a format preferred by US customer 120 (such as HTML). Meanwhile, a Japanese customer 122 may receive email 116 in the Japanese language and grammar. The email 116 may further be in a format that Japanese customer 122 may have specified in his profile, which may be stored on the application database. Indian customer 124 may receive an email 118 in a chosen Indian dialect or if the dialect is not available, the closest dialect to the customer chosen dialect.

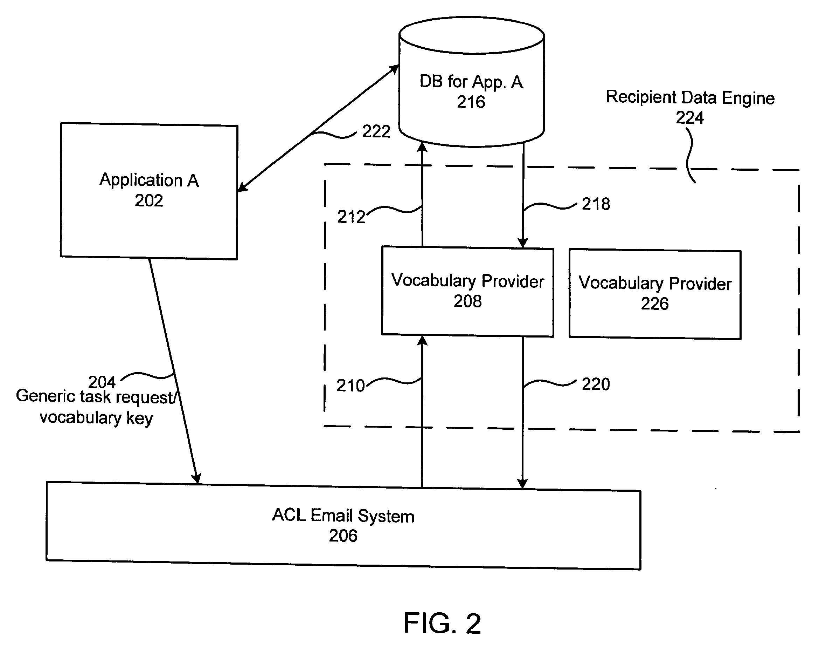

Fig. 2 shows, in accordance with an embodiment of the present invention, how an email system using the received vocabulary key may work with any application or any task to obtain the required specific recipient data. As shown by the example of Fig. 2, the operational steps employed to obtain the required specific recipient data that is required for a particular email task are hidden from the application. As long as there is a vocabulary provider created for the particular application/task, the application may rely on the email system to carry out any needed steps to obtain the required specific recipient data once the application furnishes the email system with unique identifying data (e.g., order number) in the vocabulary key that allows the email system to access the appropriate record in the application database.

With reference to Fig. 2, application A 202 may send a task (e.g., confirmation of a purchase order) and a vocabulary key 204 to ACL Email System 206. ACL Email System 206 may then send the vocabulary key via 210 to a recipient data engine 224 to obtain specific recipient data.

In the example of Fig. 2, recipient data engine is implemented by a plurality of vocabulary providers that are in communication with both ACL email system 206 and application database 216. Even though Fig. 2 shows vocabulary provider 208 and vocabulary provider 226 as components separate from the ACL Email System 206, the vocabulary providers may be a plug-in components of the email system in another embodiment. Generally a particular application/task combination may be mapped to a specific vocabulary provider. There also exist a default or generic vocabulary provider, which may be employed if no vocabulary provider exists for a particular application/task combination. The email system selects the appropriate vocabulary provider to receive the vocabulary key based on the identity of the application/task.

Since the vocabulary provider is chosen on the basis of a particular application/task combination, that vocabulary provider contains vocabulary tags that are configured to obtain data necessary to service the task request for that application. For example, a vocabulary provider for an order confirmation task may contain vocabulary tags for the identity of the purchaser and the type and amount of goods purchased. A vocabulary provider associated with a monthly statement-providing task for a banking application may include vocabulary tags for the identity of the bank customer, the opening balance of the account at the beginning of the month, the transactions during the month, and the closing balance at the end of the month.

In the example of Fig. 2, the vocabulary key is sent to vocabulary provider 208. Subsequently, vocabulary provider 208 may send the vocabulary key and vocabulary tags via path 212 to an application database 216 (e.g., database of application A). In return, application database 216 may send back via path 218 to the vocabulary provider 208 specific recipient data (e.g., customer name, customer order number, customer content preference, customer city/country, amount purchased etc.) that has been requested. The vocabulary provider 208 then forwards the specific recipient data via 220 to the ACL Email System 206.

In regard to the vocabulary provider 208, there may be one or more vocabulary providers for each application. Each vocabulary provider may have a set of pre-defined vocabulary tags, which may differ from vocabulary provider to vocabulary provider. If a newly defined task requires vocabulary tags that are not defined within an existing vocabulary provider, another vocabulary provider may be created or an existing vocabulary provider may be updated to accommodate that task.

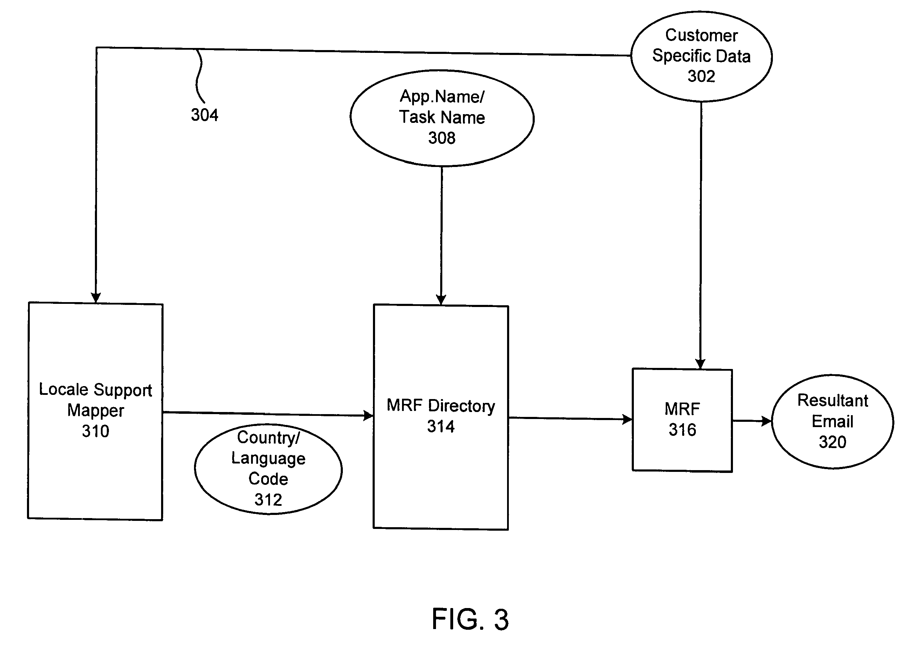

Fig. 3 illustrates, in accordance with an embodiment of the present invention, how a customized email may be created from data pertaining to the identity of the application and the task, as well as from the specific recipient data (which is in turn obtained using data in the vocabulary key as well as data regarding the application and the task as discussed in connection with Fig. 2). Note again that the operational steps employed to create the customized email to service a particular email task request are hidden from the application. Furthermore, these operational steps are modularized to permit the email system to service different applications and different tasks.

As discussed in connection with a previous Fig. 2, the ACL Email System 206 may receive from the vocabulary provider 208 the specific recipient data. In the context of the example of Fig. 3, the specific recipient data represents customer specific data 302. For example, ACL Email System 206 may receive from a network-based application A specific customer data such as customer name, customer order number, customer preference in regard to email format, customer locale related-data, amount purchase, date purchased, etc.

Locale related-data 304 may be derived from the customer's address (e.g., country) or from data explicitly gathered from a customer's language and/or dialect preference. The locale related-data 304 may be sent to a locale support mapper 310 to obtain a localization specification, which is shown in Fig. 3 in the form of a country code/language code 312.

MRF directory 314 contains a plurality of MRFs, each of which is specific to a combination of application/task/localization specification. For example, an MRF may exist for an ordering confirmation task for an invoicing application for the Great Britain/English localization specification. Another MRF may exist for the same ordering confirmation task for the same invoicing application but is adapted for the Mexico/Spanish localization specification (i.e., same application/task but a different localization specification). Another MRF may exist for a payment reminder task for the same invoicing application for the Great Britain/English localization specification (i.e., same application and localization specification but a different task). Yet another MRF may exist for the same ordering confirmation task for a different invoicing application for the Great Britain/English localization specification (i.e., same task and localization specification but a different application).

Using data pertaining to the identity of the application and the task, as well as the localization specification, the email system then selects the appropriate MRF 316 from MRF directory 314 to use to service the requested email task. Thus, the selection of the appropriate MRF substantially accomplishes locale customization (e.g., conforming to the specified or perceived preference of the recipient regarding language and grammar).

In an embodiment, an MRF may have different content customization sections configured to satisfy different content customizations. For example, one content customization section may be configured to send only plain text information to the recipient. Another section may be configured to send the information in HTML and animation graphics. Other types of content customization are also possible and the examples provided herein are not intended to be limiting or an exhaustive list. Generally speaking, content customization is performed based on content preference indicated by the recipient or assigned to the recipient by the email system.

As shown in Fig. 3, the customer specific data 302 may be plugged into various fields in the appropriate section in the MRF 316 to produce a customized email 320. In this manner, the email produced is not only customized with respect to locale customization (by selecting the appropriate MRF) but also with respect to content customization (by filling in the appropriate section in the selected MRF).

Note that it is possible to implement content customization by providing different MRFs for different content preference settings. In this manner, selecting the appropriate MRF (based on the content preference setting obtained from the specific recipient data) accomplishes content customization. It is also possible to implement locale customization by providing for different locale-specific sections in a MRF, with each section being configured to address a different localization specification. Still further, the locale customization and/or the content customization may be accomplished by any combination of the section approach and the discrete MRF approach.

In regard to the locale support mapper, there may be various configuration files associated with a locale support mapper. These configuration files may define whether or not specific locale related-data may have explicit support, approximate support, or default support. For example, Hindi, an Indian dialect, may have explicit support. In other words, there is an MRF for the Hindi localization specification. Thus, if a recipient locale-related data indicates that Hindi is the preferred language, there is explicit support for that language in an MRF. Generally speaking, the locale-related data may be implicitly derived from the specific recipient data (e.g., from the address information) or may be explicitly specified by the recipient (e.g., the recipient may have specified during purchasing that Hindi is the preferred language for receiving email communication).

Some locale-related data may have only approximate support. For example, Urdu, another Indian dialect, may be the locale-related data for another recipient. However, there is not an Urdu MRF. In this case, intelligence may be built into the locale support mapper to map the Urdu locale-related data to Hindi since Hindi and Urdu are dialects with many similarities. The approximate support results in the Hindi localization specification for a recipient whose locale-related data indicates Urdu. For that Urdu recipient, a Hindi MRF may be employed instead.

Other locale-related data may have neither explicit support nor approximate support. In this case, default support may be furnished. For example, Swahili may be the locale-related data for a particular recipient. Swahili may not be explicitly supported and there may not be another similar language or dialect to implement approximate support. As a result, a default language (e.g., English) may be used, resulting in an English localization specification being obtained for the Swahili recipient. In this case, an English MRF may be employed for the communication task.

By mapping the locale-related data of a particular recipient with the appropriate localization specification, the appropriate MRF may be chosen to implement locale customization. Using configuration files to specify the locale mapping ensures that locale customization can be flexibly supported and/or modified for any recipient.

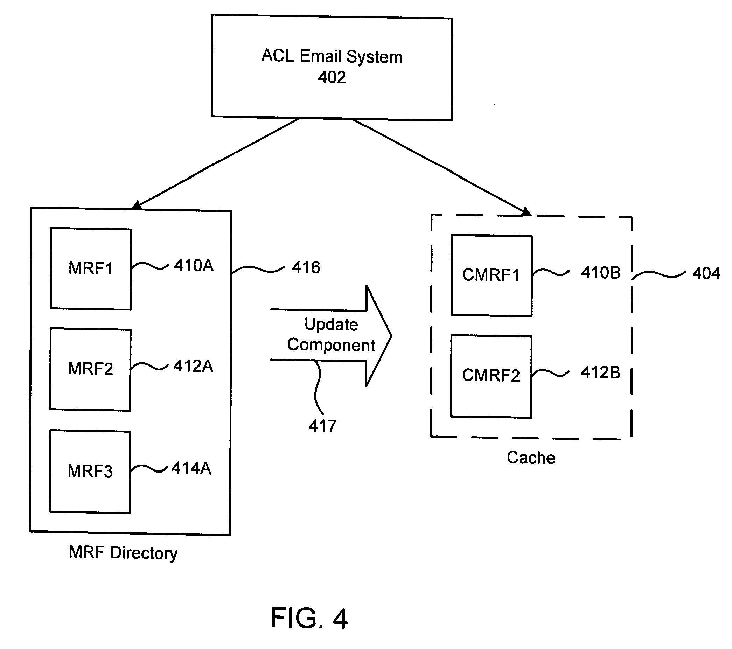

Fig. 4 illustrates, in an embodiment of the present invention, the hot configuration feature for various components that an email system may access. Hot configuration relates to the ability to update objects without having to power down a system or restart the software running on the system.

To illustrate how hot configuration may work, MRF files are employed as examples. For example, ACL Email System 402 may need to call for an MRF. The ACL Email System 402 may first access cache 404. In this example, cache 404 contains cache versions 410B and 412B of MRF files 410A and 412A respectively. By storing a version of the MRFs on the cache, the ACL Email System 402 may be able to access the MRFs quickly.

Hot configuration may be employed when a new MRF is created or a current MRF is updated. For example, the MRF directory 416 may contain MRFs 410A, 412A, and 414A. Of these, MRF 410A has been updated since the last time it was called and MRF 414A is a new MRF that has been created recently. When the ACL Email System 402 calls for a specific MRF, such as MRF 410A, the ACL Email System 402 may first check cache 404. If the cache 404 MRF version 410B is different than its counterpart 410A in MRF directory 416 (e.g., based on a comparison of the last modified date data), the latest MRF 410A may be loaded via an update component 417 into the cache 404 before the MRF may be used by the ACL Email System 402.

In another embodiment, update component 417 may let an operator know that the MRF directory 416 contains updated/new MRFs that may need to be loaded onto the cache system 404. Alternatively, update component may proceed to upload the updated/new MRFs into the cache. These methods are substantially more proactive in its updating of the cache copy and does not require the email system to check to make sure that the cache contains the most updated version of the MRF whenever the MRF is called.

In context of hot configuration, a new MRF may be mapped in a locale support mapper by modifying the configuration files in the locale support mapper. Generally speaking, locale mapping relates to the locale-related data being matched in the locale support mapper with the localization specification associated with an MRF. For example, if a new Urdu MRF 414A is created, the configuration files of the locale support mapper may be updated to reflect the fact that Urdu is no longer approximately supported. Urdu is now an explicitly supported language and the localization specification for an Urdu recipient is now Urdu (which results in the Urdu MRF 414A or a cached version thereof being selected for the email task). The configuration files for the support mapper may be hot configurable in the same manner as discussed in connection with the MRFs, for example.

Other components that may be hot configurable include application task configuration files, vocabulary providers, etc. For the application task configuration files, only updated portions of the configuration files may need to be reloaded to a cache in an embodiment. Updates to the locale support mapper configuration files and vocabulary providers may occur in a similar fashion.

To help better understand architecture of the inventive methodology, sample codes are provided below. Listing 1 below shows an embodiment of the present invention, a sample configuration file for one registered application (example-app) that defines two registered tasks (Example 1 and Example 2). The configuration file contains detailed information about the application and the tasks related to that application. Also defined in the configuration file may be MRF directories that contain MRFs, which may be specific to each task. Further, the configuration file may store application header (e.g., the sender name, address, etc.). Each task may be defined in the configuration file. In a further embodiment, header may also be found in a task section. The header, which may be within the task section, may override the application header. The configuration file may also show examples of vocabulary providers.

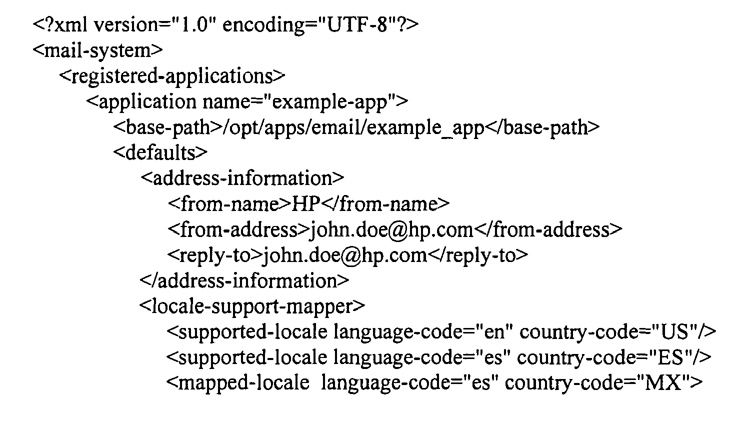

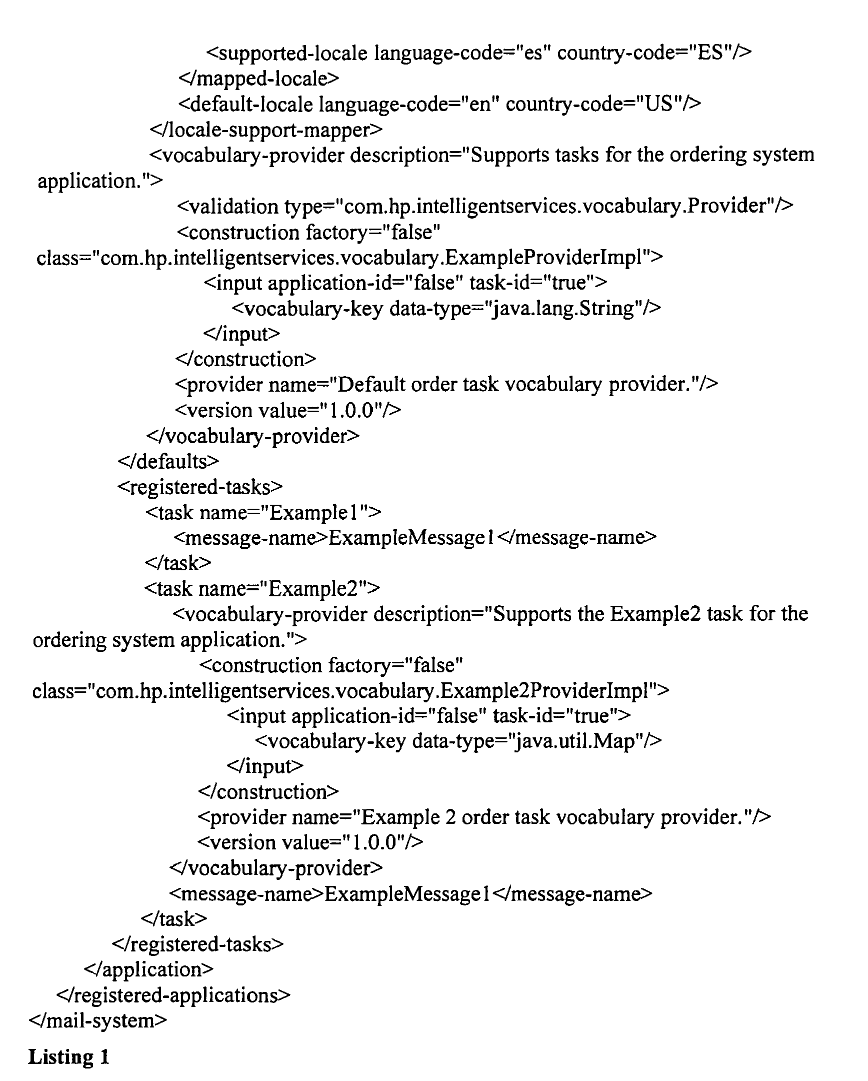

Following are explanations of the sample configuration file in Listing 1. Listing 1 is an example of codes that may be in a configuration file. However, the sample codes do not in any way encompass all the ways that configuration files may be presented.

In the sample configuration file of Listing 1, an application may define a base path (i.e., /opt/apps/email/example_app). This base path may be where registered task message resource files originate. Each registered task may define a message-name, which may be the name of a directory that contains resource files for a message (i.e., MRF directory).

Further, the sample configuration file may contain a default section. This section generally contains header data (i.e., sender name, sender address, etc.) that may apply to tasks for an application. Similarly, this data (i.e., sender name, sender address, etc.) may be stored under a task specific section. When a task related-header is found under the task specific section, the task related-header may override the default header.

The sample configuration file may also contain a default locale support mapper section for an application. The locale support mapper section defines the supported locales. If an item is defined as supported (i.e., has explicit support), then there is generally a localized MRF for a locale.

However, if an item is mapped (i.e., approximate support), then when the mapped locale is requested, a specified supported locale may be used instead. In the example in Listing 1, Spanish language in Spain has explicit support. If Spanish from Mexico is requested, then the locale support mapper may map the request to Spanish from Spain.

Further, if a certain locale is requested that is not supported or specifically mapped to an alternate supported locale, then a default-locale may be used. Using Listing 1 to illustrate, when Japanese from Japan is requested, since there is no explicit or approximate support, US English may be the default.

If a particular task supports different locales than the rest of the tasks for that application, then another locale support mapper may be found under that particular task section. As a result, the locale support mapper defined under that particular task section might override the default locale support mapper.

Another component that may be found in the sample configuration file is vocabulary providers. As mentioned, a vocabulary provider may be a plug-in software component that generally knows how to talk to a database of the application in order to retrieve specific information for that application. The sample configuration file defines a way to access and use the vocabulary provider. The sample configuration file may also define data types of a vocabulary key. The example illustrated in Listing 1 is specific to the Java programming language; however, any object-oriented language would relate well to this example.

Similarly to the locale support mapper, if a task needs vocabulary tags that are not supported by the default vocabulary provider, then another vocabulary provider may be defined under that particular task section. As a result, when a vocabulary provider is needed to extract specific data from an application database, the vocabulary provider defined under that task section may override the default header.

A component that the sample configuration file may also define is task. Tasks listed in sample configuration file for an application usually are tasks that are supported by an application. A registered task may use all application defaults, or the task may override any of the defaults with its own values. In the example in Listing 1, task name Example 1 uses all the defaults, but Example2 overrides the application vocabulary provider. Also, within the task section may be an MRF directory that relates to the task.

Further, a configuration file may be hot configurable. An example of hot configuration has been shown in Fig. 4. When an email system accesses a configuration file, the system may check to see if the configuration file is the most updated version. If not, the configuration file may be updated.

To aid in the understanding of how a customized and localized email may be the result of this inventive methodology, an example of an MRF is shown below in Listing 2. Listing 2 is an example of an MRF and should not be construed as the only way an MRF may be structured. Generally, MRFs may contain information required to create unprocessed mail content for a particular locale for a given application task. An MRF may contain multiple content possibilities (e.g., plain text, html, etc.). Also, each content section may specify, but is not limited to, character set encoding, content type, subject, body, and vocabulary tags that an email system may replace with dynamic encoding so that a message may be fully localized. Each message resource file may be loaded the first time that the MRF is requested and may be hot configured, as updates are needed.

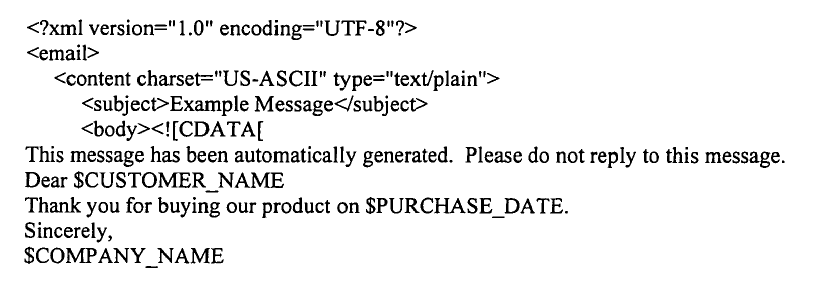

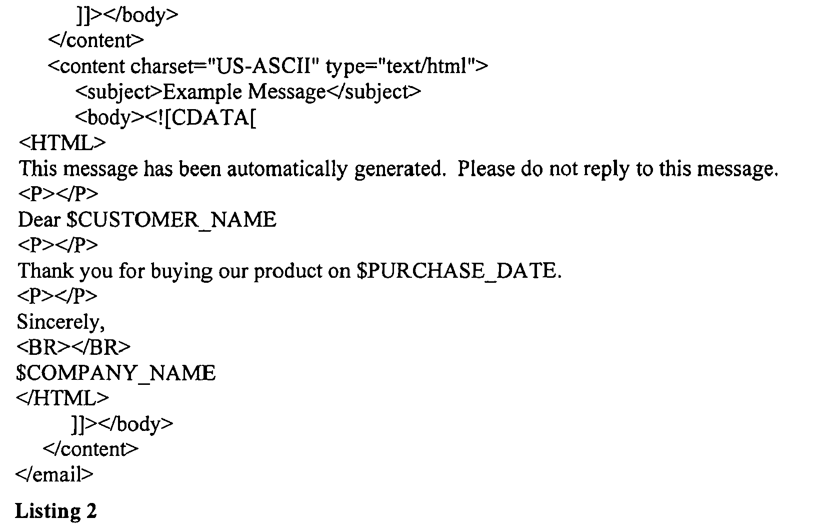

As can be appreciated from the foregoing, embodiments of the invention provide highly configurable email systems that are capable of automating any mass emailing task on behalf of any application. The emails that are sent may be content-customized and/or locale-customized as desired. By encapsulating the detail steps required to obtain the specific recipient data and/or to customize the emails in the email system, embodiments of the invention enable any application to be endowed with a customized mass email capability by simply having the application send a vocabulary key along with the generic task request to the email system.

From the perspective of the application making the task request, that application only needs to generically specify the task to be performed (e.g., confirmation of an order) along with sufficient information in the vocabulary key to identify the recipient (e.g., John Smith) and/or transaction of interest (e.g., purchase order #1577). The task of obtaining the rest of the data required to properly fill out the email from the application database records and the customization task are performed in a manner that is substantially transparent to the application making the generic request.

As mentioned, the invention provides many other benefits. For example, a benefit of this approach is that the organization or entity that maintains or operates the application no longer needs to maintain an email component. Another example benefit of this approach is that a single email system can serve the needs of different applications and different tasks, even if those applications are completely unrelated and/or operated by different organizations and/or executing on servers located in different regions of the world.

While this invention has been described in terms of several embodiments, there are alterations, permutations, and equivalents, which fall within the scope of this invention. It should also be noted that there are many alternative ways of implementing the methods and apparatuses of the present invention. It is therefore intended that the following appended claims be interpreted as including all such alterations, permutations, and equivalents as fall within the true spirit and scope of the present invention.

## Claims

1. An automated email system configured to perform an email task with respect to a recipient on behalf of an application, comprising:
a recipient data engine (224) configured to obtain specific recipient data pertaining to said recipient responsive to a request from said application to perform said email task; and
a message resource file directory (MRFD) (314) configured to provide a message resource file (MRF) (316) that is specific at least to said email task and said application, said MRF (316) being configured to generate a customized email (320) that is customized for said recipient based on said specific recipient data, said customized email (320) being customized in at least one of a first customized manner and a second customized manner, said first customized manner representing locale customization, said second customized manner representing content customization.

2. The automated email system of claim 1 wherein said customized email (320) is customized in both said first customized manner and said second customized manner.

3. The automated email system of claim 1 wherein said recipient data engine (224) is configured to receive a vocabulary key from said application and to obtain said specific recipient data from a vocabulary provider (208) using said vocabulary key, said vocabulary provider (208) being configured to provide specific vocabulary tags required by to perform said email task and to obtain said specific recipient data using said specific vocabulary tags.

4. The automated email system of claim 3 wherein said vocabulary provider (208) is configured to obtain said specific recipient data from an application database (216) associated with said application using said specific vocabulary tags.

5. The automated email system of claim 4 wherein said vocabulary provider (208) is configured to map said specific vocabulary tags to corresponding data fields in said application database (216).

6. The automated email system of claim 4 further comprising a locale support mapper (310), said locale support mapper (310) being configured to map said specific recipient data to a particular localization specification.

7. The automated email system of claim 6 wherein said MRF (316) includes a plurality of content customization sections, said particular localization specification is employed to select a particular content customization section of said plurality of content customization sections with which to perform said content customization.

8. The automated email system of claim 7 wherein said content customization includes one of a HTML format and a text format.

9. The automated email system of claim 6 wherein said MRF (316) is selected from said MRFD (314) based on said particular localization specification, thereby implementing said locale customization.
